# EUROPEAN PATENT APPLICATION

(11) **EP 2 395 801 A1**
(43) Date of publication of application: **14.12.2011**
(21) Application number: 10738488.5
(22) Date of filing: 01.02.2010
(51) Int. Cl.: H04W 72/04, H04W 74/08

(54) **MOBILE COMMUNICATION METHOD AND RADIO BASE STATION**

(30) Priority: 04.02.2009 JP 2009024131
(71) Applicant: NTT DOCOMO, INC., Chiyoda-ku Tokyo 100-6150 (JP)
(72) Inventor: OKUBO, Naoto, Tokyo 100-6150 (JP); ISHII, Hiroyuki, Tokyo 100-6150 (JP)
(74) Representative: HOFFMANN EITLE
(86) International application number: PCT/JP2010/051359
(87) International publication number: WO 2010/090156

(57) **Abstract**

A mobile communication method according to the present invention, includes the steps of: (A) assigning a radio resource for a PRACH, in each cell within a mobile communication system in which cells are synchronized; and (B) performing, at a mobile station (UE), a random access procedure by transmitting an RA preamble via the PRACH using the radio resource assigned in each cell, wherein in the step (A), as the radio resource for a PRACH, a resource block in a different sub-frame is assigned between adjacent cells.

## Description

### TECHNICAL FIELD

The present invention relates to a mobile communication method and a radio base station.

### BACKGROUND ART

In a mobile communication system of the LTE (Long Term Evolution) scheme, a mobile station UE is configured to transmit an RA (Random Access) preamble via a PRACH (Physical Random Access Channel) in order to start a random access procedure performed at a start of communication.

### SUMMARY OF THE INVENTION

### PROBLEMS TO BE SOLVED BY THE INVENTION

However, in the 3GPP, there is no defined method of assigning the above-described radio resource for a PRACH, and therefore, there is a case where the radio resource for a PRACH is not appropriately assigned in the above-described mobile communication system, which is a problem.

Therefore, the present invention is intended to overcome the above-described problem. An object of the present invention is to provide a mobile communication method and a radio base station, capable of appropriately assigning a radio resource for a PREACH.

### MEANS FOR SOLVING THE PROBLEM

A first aspect of the present invention is summarized as a mobile communication method, including the steps of: (A) assigning a radio resource for a physical random access channel in each cell within a mobile communication system in which cells are synchronized; and (B) performing, at a mobile station, a random access procedure by transmitting a random access preamble via the physical random access channel using the radio resource assigned in each cell, wherein in the step (A), as the radio resource for a physical random access channel, a resource block in a different sub-frame is assigned between adjacent cells.

A second aspect of the present invention is summarized as a mobile communication method, including the steps of: (A) assigning a radio resource for a physical random access channel in each cell within a mobile communication system; and (B) performing, at a mobile station, a random access procedure by transmitting a random access preamble via the physical random access channel using the radio resource assigned in each cell, wherein in the step (A), as the radio resource for a physical random access channel, a resource block in a different sub-carrier is assigned between adjacent cells.

A third aspect of the present invention is summarized as a mobile communication method, including the steps of: (A) assigning a radio resource for a physical random access channel in each cell within a mobile communication system in which cells are synchronized; and (B) performing, at a mobile station, a random access procedure by transmitting a random access preamble via the physical random access channel using the radio resource assigned in each cell, wherein in the step (A), as the radio resource for a physical random access channel, a resource block in a different sub-frame and a different sub-carrier is assigned between adjacent cells.

A fourth aspect of the present invention is summarized as a mobile communication method, including the steps of: (A) assigning a radio resource for a physical random access channel in each sector within each cell within a mobile communication system; and (B) performing, at a mobile station, a random access procedure by transmitting a random access preamble via the physical random access channel using the radio resource assigned in each sector, wherein in the step (A), as the radio resource for a physical random access channel, a resource block in a different sub-frame is assigned between adjacent sectors under the control of a radio base station.

A fifth aspect of the present invention is summarized as a radio base station used in a mobile communication system in which cells are synchronized, including: a resource assignment unit configured to assign a radio resource for a physical random access channel, in a cell under the control of the radio base station; and a random access procedure unit configured to perform a random access procedure upon receipt of a random access preamble via the physical random access channel using the radio resource assigned by the resource assignment unit from a mobile station located in the cell, wherein the resource assignment unit is configured to assign a resource block in a sub-frame different from a cell adjacent to the cell, as the radio resource for a physical random access channel, in the cell.

A sixth aspect of the present invention is summarized as a radio base station used in a mobile communication system, including: a resource assignment unit configured to assign a radio resource for a physical random access channel, in a cell under the control of the radio base station; and a random access procedure unit configured to perform a random access procedure upon receipt of a random access preamble via the physical random access channel using the radio resource assigned by the resource assignment unit from a mobile station located in the cell, wherein the resource assignment unit is configured to assign a resource block in a sub-carrier different from a cell adjacent to the cell, as the radio resource for a physical random access channel, in the cell.

A seventh aspect of the present invention is summarized as a radio base station used in a mobile communication system in which cells are synchronized, including: a resource assignment unit configured to assign a radio resource for a physical random access channel, in a cell under the control of the radio base station; and a random access procedure unit configured to perform a random access procedure upon receipt of a random access preamble via the physical random access channel using the radio resource assigned by the resource assignment unit from a mobile station located in the cell, wherein the resource assignment unit is configured to assign a resource block in a sub-frame and a sub-carrier different from a cell adjacent to the cell, as the radio resource for a physical random access channel, in the cell.

A eighth aspect of the present invention is summarized as a radio base station used in a mobile communication system, including: a resource assignment unit configured to assign a radio resource for a physical random access channel, in a sector within a cell under the control of the radio base station; and a random access procedure unit configured to perform a random access procedure upon receipt of a random access preamble via the physical random access channel using the radio resource assigned by the resource assignment unit from a mobile station located in the sector, wherein the resource assignment unit is configured to assign a resource block in a sub-frame different from a sector adjacent to the sector, as the radio resource for a physical random access channel, in the sector.

### EFFECT OF THE INVENTION

As explained above, according to the present invention, it is possible to provide a mobile communication method and a radio base station, capable of appropriately assigning a radio resource for a PRACH.

### BRIEF DESCRIPTION OF THE DRAWINGS

[Fig. 1] Fig. 1 is a diagram showing the entire configuration of a mobile communication system according to a first embodiment of the present invention.
[Fig. 2] Fig. 2 is a functional block diagram of a radio base station according to a first embodiment of the present invention.
[Fig. 3] Fig. 3 is a diagram illustrating one example of a radio resource for PRACH, a radio resource for PUSCH, and a radio resource for PUCCH assigned by the radio base station according to the first embodiment of the present invention.
[Fig. 4] Fig. 4 is a table explaining one example of a timing of transmitting an RA preamble in a mobile communication system according to the first embodiment of the present invention.
[Fig. 5] Fig. 5 is a diagram illustrating one example of a format of the RA preamble used in the mobile communication system according to the first embodiment of the present invention.
[Fig. 6] Fig. 6 is a sequence chart illustrating a random access procedure performed in the mobile communication system according to the first embodiment of the present invention.

### BEST MODES FOR CARRYING OUT THE INVENTION

### (Configuration of mobile communication system according to first embodiment of the present invention)

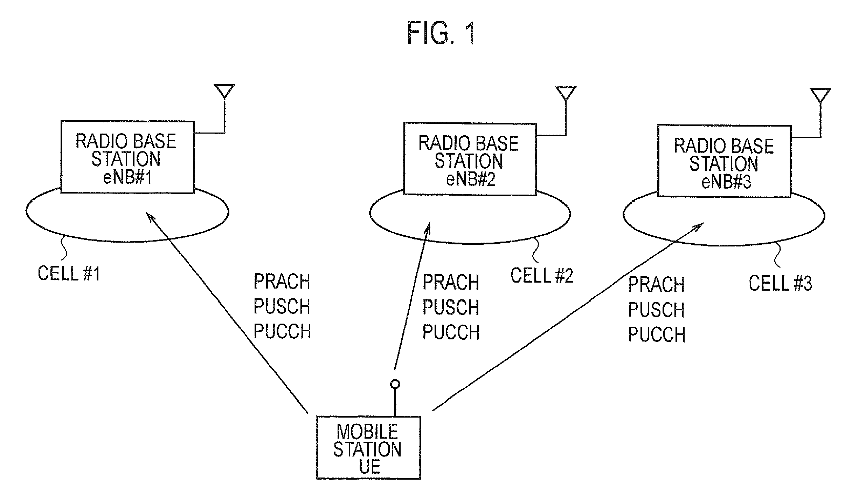

With reference to Fig. 1 to Fig. 5, the configuration of a mobile communication system according to a first embodiment of the present invention will be explained.

The mobile communication system according to this embodiment is a mobile communication system of the LTE scheme, and includes a plurality of radio base stations eNB#1 to eNB#3, as illustrated in Fig. 1.

For example, as illustrated in Fig. 1, in the mobile communication system according to this embodiment, in a cell #1 under the control of the radio base station eNB#1, a cell #2 under the control of the radio base station eNB#2, and a cell #3 under the control of the radio base station eNB#3, for example, the mobile station UE is configured to transmit information (an RA preamble, a message 3, etc.) relating to a random access procedure via a PRACH, to transmit uplink data via a PUSCH (Physical Uplink Shared Channel), and to transmit uplink control data via a PUCCH (Physical Uplink Control Channel).

It is noted that in Fig. 1, the cell #1 may be configured to be divided into a plurality of sectors #1-1 to #1-n, the cell #2 may be configured to be divided into a plurality of sectors #2-1 to #2-n, and the cell #3 may be configured to be divided into a plurality of sectors #3-1 to #3-n.

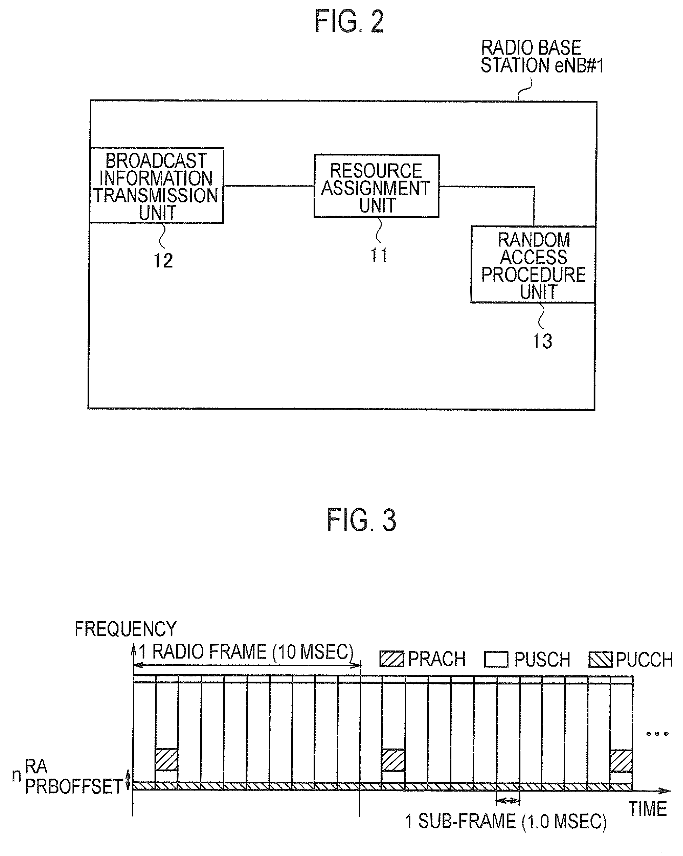

The radio base stations eNB#1 to eNB#3 are basically the same in configuration, and therefore, the configuration of the radio base station eNB#1 is representatively explained, below. As illustrated in Fig. 2, the radio base station eNB#1 includes a resource assignment unit 11, a broadcast information transmission unit 12, and a random access procedure unit 13.

The resource assignment unit 11 is configured to assign a radio resource for a predetermined channel in each cell (for example, the cell #1) under the control of the radio base station eNB#1.

Specifically, as illustrated in Fig. 3, in each cell under the control of the radio base station eNB#1, the resource assignment unit 11 is configured to assign a radio resource for a PRACH, a radio resource for a PUSCH, a radio resource for a PUCCH, etc., as a radio resource for an uplink channel.

In this case, the resource assignment unit 11 is configured to assign six RBs (Resource Blocks) in a specific sub-frame. It is noted that one resource block is configured by 7 SC-FDMA symbols in a time direction and 12 sub-carriers in a frequency direction.

Alternately, if it is regarded that the length in the time direction of the one resource block is 1 ms, then it may be possible to regard that one resource block is configured by 14 SC-FDMA symbols in the time direction and 12 sub-carriers in the frequency direction.

The resource assignment unit 11 is configured to fixedly secure the radio resource for a PRACH, and to assign a portion other than the radio resource for a PRACH and the radio resource for a PUCCH in each radio frame as the radio resource for a PUSCH.

Moreover, "n_{PRBoffset} ^{RA}" in Fig. 3 is a parameter used for determining a position of the radio resource for a PRACH in the frequency direction, and when such "n_{PRBoffset} ^{RA}" is used, it is possible to assign the radio resource for a PRACH even at any system bandwidth position in the frequency direction.

It is noted that the resource assignment unit 11 is configured to assign, in each cell under the control of the radio base station eNB#1 a radio resource for a PDSCH (Physical Downlink Shared Channel), a radio resource for a PDCCH (Physical Downlink Control Channel), a radio resource for a PCFICH (Physical Control Format Indicator Channel), a radio resource for a PHICH (Physical Hybrid ARQ Indicator Channel), etc., as a radio resource for a downlink.

The broadcast information transmission unit 12 is configured to notify, to the mobile station UE within the cell #1, the radio resource for a PRACH assigned by the resource assignment unit 11 by way of broadcast information mapped to a BCCH (Broadcast Channel) via a PDSCH.

In this case, the radio resource for a PREACH is "PRACH Configuration Index" indicating a resource position of a PRACH in the time direction, "PRACH Frequency Offset" indicating a resource position of a PRACH in the frequency direction, a sequence number of an RA preamble transmitted via a PRACH described later, and "High Speed Flag" indicating whether or not a high-speed movement is compatible in the cell, for example.

It is noted that the information relating to the above-described radio resource for a PRACH is not only notified as the broadcast information but may also be notified to the mobile station UE as an RRC message or dedicated signaling. In the RRC message, a handover command instructing a handover, for example, is included.

For example, the broadcast information transmission unit 12 may be configured to notify the radio resource for a PRACH in the frequency direction assigned by the resource assignment unit 11 by notifying "PRACH Frequency Offset" by way of the above-described broadcast information.

More specifically, a resource block number (nPRBoffsetRA) having the smallest frequency, of the six resource blocks assigned as the radio resource for a PRACH, may be notified as the "PRACH Frequency Offset", for example.

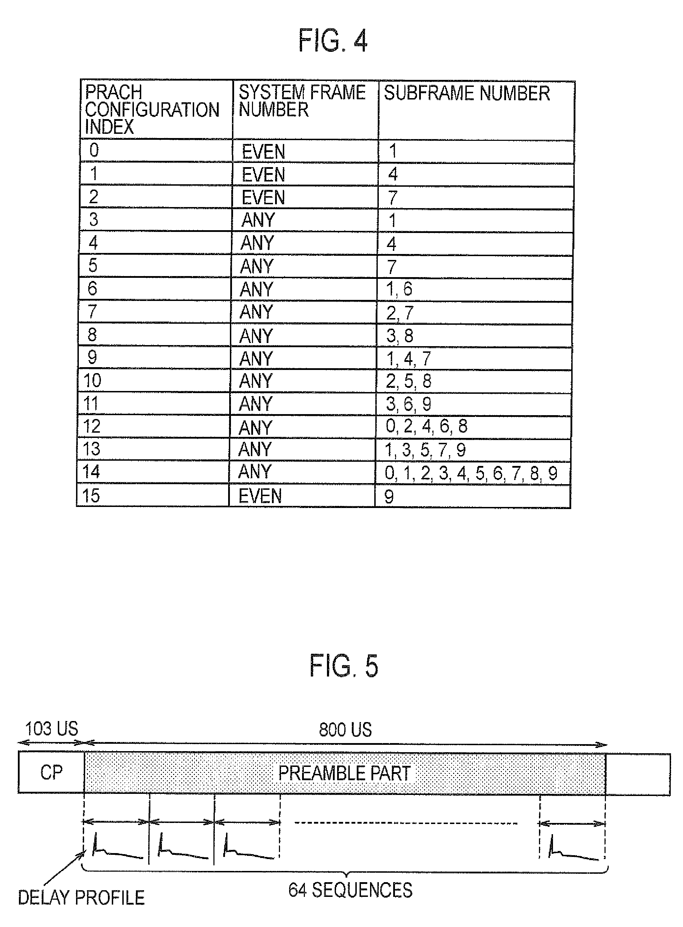

For example, the broadcast information transmission unit 12 may be configured to notify the radio resource for a PRACH assigned by the resource assignment unit 11 by notifying "PRACH Configuration Index" illustrated in Fig. 4, by way of the above-described broadcast information.

In such a case, by "System Frame number" and "Subframe number" illustrated in Fig. 4, a timing of transmitting the RA preamble via a PRACH, i.e. , a sub-frame that is a resource in the time direction in the radio resource for a PRACH, is specified.

For example, as the sequence of the RA preamble transmitted via a PRACH, similarly to the sequence of a Reference Signal (RA), a Zadoff-Chu sequence having a small auto correlation and cross correlation is used.

In this case, by taking advantage of the nature that the Zadoff-Chu sequence is orthogonal to a sequence obtained by performing "Cyclic shift" on the Zadoff-Chu sequence, "Cyclic shift" is applied to one Zadoff-Chu sequence, and in this way, a plurality of RA preamble sequences can be created from one Zadoff-Chu sequence.

It is noted that a "Cyclic shift amount" needs to be larger than a round-trip propagation delay in the uplink between the radio base station eNB and the mobile station UE in each cell.

In an example of Fig. 5, the "Cyclic shift amount" is set to "12.5 us", and in this state, 64 RA preamble sequences are produced in a single cell.

In the mobile communication system of the LTE scheme, a total of 839 Zadoff-Chu sequences for a PRACH are defined, and a total of 504 cell IDs are defined.

Therefore, in the mobile communication system of the LTE scheme, as in the example of Fig. 5, if 64 RA preamble sequences can be created from one Zadoff-Chu sequence, then it may suffice to assign one Zadoff-Chu sequence to one cell.

However, when an actual propagation delay, a timing error of transmitting the mobile station UE, etc., are taken into consideration, it is not realistic to set the "Cyclic shift amount" to a small value such as "12.5 us", and thus, it is probably necessary to assign a plurality of Zadoff-Chu sequences to one cell.

Therefore, the resource assignment unit 11 is configured to assign the radio resource for a PRACH so that the orthogonal property of the RA preamble sequences between adjacent cells or between adjacent sectors is not collapsed, as described below, i.e., so that the RA preamble sequences do not collide with each other.

Specifically, when the mobile communication system according to this embodiment is a mobile communication system in which cells are synchronized (i.e., a cell synchronization system), the resource assignment unit 11 may be configured to assign, as the radio resource for PRACH, a resource block in a sub-frame different from a cell adjacent to the cell #1, in the cell #1.

For example, when the mobile communication system according to this embodiment is a cell synchronization system, as the radio resource for a PRACH, it may be possible that a resource block in a sub-frame #1 is assigned in the cell #1, a resource block in a sub-frame #4 is assigned in the cell #2, and a resource block in a sub-frame #7 is assigned in the cell #3.

Moreover, when the mobile communication system according to this embodiment is a mobile communication system in which cells are synchronized (i.e., a cell synchronization system), the resource assignment unit 11 may be configured to assign, as the radio resource for a PRACH, a resource block in a sub-carrier different from a cell adjacent to the cell #1, in the cell #1.

For example, when the mobile communication system according to this embodiment is a cell synchronization system, it may be possible as the radio resource for a PRACH that in the cell #1, six resource blocks are assigned in order from a resource block having a high frequency within the system bandwidth; in the cell #2, six center resource blocks within the system bandwidth are assigned; and in the cell #3, six resource blocks are assigned in order from a resource block having a low frequency within the system bandwidth.

Moreover, when the mobile communication system according to this embodiment is a mobile communication system in which cells are synchronized (i.e., a cell synchronization system), the resource assignment unit 11 may be configured to assign, as the radio resource for a PRACH, resource blocks in a sub-carrier and a sub-frame different from a cell adjacent to the cell #1, in the cell #1.

Moreover, when the mobile communication system according to this embodiment is a mobile communication system in which cells are not synchronized (i.e., a cell non-synchronization system), the resource assignment unit 11 may be configured to assign, as the radio resource for a PRACH, a resource block in a sub-carrier different from a cell adjacent to the cell #1, in the cell #1.

For example, even when the mobile communication system according to this embodiment is a cell non-synchronization system, similarly to the cell synchronization system, it may be possible as the radio resource for a PRACH that in the cell #1, six resource blocks are assigned in order from a resource block having a high frequency within the system bandwidth; in the cell #2, six center resource blocks within the system bandwidth are assigned; and in the cell #3, six resource blocks are assigned in order from a resource block having a low frequency within the system bandwidth.

Moreover, when the mobile communication system according to this embodiment is a mobile communication system in which a sector configuration is adopted, the resource assignment unit 11 may be configured to assign, as the radio resource for a PRACH, a resource block in a sub-frame different from the cell 1-2 under the control of the radio base station eNB#1 adjacent to the cell #1-1, in the cell #1.

That is, between the adjacent sectors under the control of the same radio base station eNB#1, the resource block in a different sub-frame is configured to be assigned as the radio resource for a PRACH.

The random access procedure unit 13 is configured to perform a random access procedure, when receiving the RA preamble via a PRACH using the radio resource assigned by the resource assignment unit 11, from the mobile station UE located in the cell #1 under the control of the radio base station eNB#1.

### (Operation of the mobile communication system according to the first embodiment of the present invention)

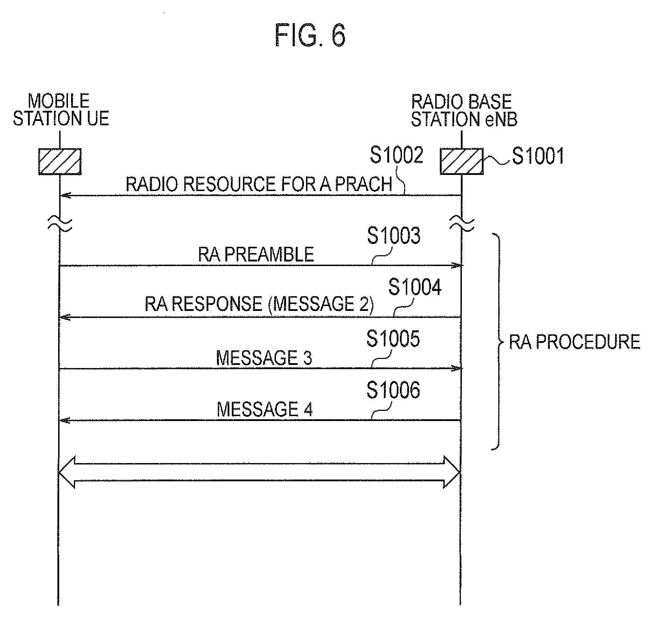

With reference to Fig. 6, the operation of the mobile communication system according to the present embodiment will be explained, below.

As illustrated in Fig. 6, in step S1001, the radio base station eNB assigns the radio resource for a PRACH, so as not to collide with the radio resource for a PRACH assigned in the adjacent cell or sector in the cell or sector under the control of the radio base station eNB, i.e., so that the RA preamble sequences do not collide with each other between the adjacent cells or adjacent sectors.
In step S1002, the radio base station eNB transmits the broadcast information including the assigned radio resource for a PRACH (the resource block and the RA preamble sequence, etc.) in the cell or sector under the control of the radio base station eNB.

In step S1003, in the cell or the sector under the control of the radio base station eNB, the mobile station UE transmits a predetermined RA preamble to the radio base station eNB via a PRACH, based on the radio resource for a PRACH included in the above-described broadcast information.

In step S1004, the radio base station eNB transmits an RA response (message 2) to the mobile station UE in response to the received RA preamble.

In step S1005, the mobile station UE transmits the message 3 to the radio base station eNB based on "ULGrant" included in the RA response, and in step S1006, the radio base station eNB transmits a message 4 to the mobile station UE.

Such a random access procedure starts a communication between the mobile station UE and the radio base station eNB.

It is noted that the above-described example provides a case where the assignment is executed by deviating the radio resource for a PRACH in at least one of the frequency direction and the time direction between the adjacent cells or sectors; however, instead thereof, the assignment may be executed by deviating the radio resource for a PRACH in at least one of the frequency direction and the time report depending on the configuration or the type of the cell.

In this case, the configuration or the type of the cell or the sector (hereinafter, "cell") may be a configuration or a type of a cell in an urban area or a cell in outskirts, a configuration or a type of an outdoor cell or an indoor cell, a configuration or a type of a cell compatible with a high-speed movement (cell of "High-speed mode") or a cell not compatible with the high-speed movement (cell of "Normal-speed mode"), or a configuration or type of a cell installed at an initial introduction or a cell installed with a certain time interval after the introduction.

It is noted that the resource assignment unit 11 of the radio base station eNB may be configured to determine, in each cell, the resource block assigned as the radio resource for a physical random access channel according to the configuration or the type of each cell.

Moreover, the resource assignment unit 11 of the radio base station eNB may be configured to determine, in each sector, the resource block assigned as the radio resource for a physical random access channel according to the configuration or the type of each cell or each sector.

For example, when a cell is designed by the cell using the six resource blocks in order from a resource block having a high frequency within a system bandwidth and the cell using the six center resource blocks within the system bandwidth are used, and after the area is developed, a new cell is additionally installed later, if the six resource blocks are assigned in order from a resource block having a low frequency within the system bandwidth, then it becomes possible to additionally install a new cell without a need of considering the sequence collision with the existing cell, reconsidering the cell planning, and exerting an influence to the existing cell.

Further, when the macro cell is designed in an outdoor environment by the cell using the six resource blocks in order from a resource block having a high frequency within the system bandwidth and the cell using the six center resource blocks within the system bandwidth, and a cell in an indoor environment inside a building is installed, if the six resource blocks are assigned in order from a resource block having a low frequency within the system bandwidth, then it becomes possible to additionally install the cell inside a room such as inside a building without a need of considering a sequence collision with the existing outdoor cell, reconsidering the cell planning, and exerting an influence to the existing outdoor cell.

Moreover, in the LTE scheme, with a framework in which a manner of selecting an RA preamble sequence of transmitted via a PRACH, is changed depending on a cell compatible with a high-speed movement and a cell incompatible with the high-speed movement, the above-described "High-Speed flag" signaling is notified by the broadcast information in order to distinguish between the cell compatible with the high-speed movement and the cell incompatible with the high-speed movement.

The cell compatible with the high-speed movement is referred to as "High-speed mode", below. In this "High-speed mode", three times the RA preamble sequences are used as compared to a case where "High-speed mode" is not applied, and thus, there is a problem that the number of sequences to be used is small.

Therefore, for example, when a cell area is designed by the cell using the six resource blocks in order from a resource block having a high frequency within a system bandwidth and the cell using the six center resource blocks within the system bandwidth, and to the cell that needs to be compatible with the high-speed environment, the six resource blocks are assigned in order from a resource block having a low frequency within the system bandwidth, it becomes possible to develop the cell compatible with the high-speed environment movement, even in the case of "High-speed mode", without exerting an influence to the existing cell. In this case, examples of the cell that needs to be compatible with the high-speed environment include a cell proximate to High speed train.

### (Operation and effect of the mobile communication system according to the first embodiment of the present invention)

According to the mobile communication system based on the first embodiment of the present invention, the radio resource for a PRACH is configured to be deviated and assigned in at least one of the frequency direction and the time direction between the adjacent cells or between the adjacent sectors, and thus, it is possible to avoid the generation of an erroneous detection of the RA preamble in the radio base station eNB, which results from the collision of the RA preamble sequences.

According to the mobile communication system based on the first embodiment of the present invention, it is possible to repeatedly use one RA preamble sequence, and thus, it is possible to increase the number of pseudo-RA preamble sequences, resulting in making the system design flexible.

According to the mobile communication system based on the first embodiment of the present invention, although the RApreamble sequence is assigned in a round-robin manner, the radio resource for a PRACH is configured to be deviated and assigned in at least one of the frequency direction and the time direction, and thus, the collision of the radio resource for PRACH is not generated. This facilitates the system design.

The operation of the above-described radio base station eNB and the mobile station UE may be implemented by a hardware, may also be implemented by a software module executed by a processor, and may further be implemented by the combination of the both.

The software module may be arranged in a storing medium of an arbitrary format such as RAM(Random Access Memory), a flash memory, ROM (Read Only Memory), EPROM(Erasable Programmable ROM), EEPROM (Electronically Erasable and Programmable ROM), a register, a hard disk, a removable disk, and CD-ROM.

Such a storing medium is connected to the processor so that the processor can write and read information into and from the storing medium. Such a storing medium may also be accumulated in the processor. Such a storing medium and processor may be arranged in ASIC. Such ASIC may be arranged in the radio base station eNB and the mobile station UE. As a discrete component, such a storing medium and processor may be arranged in the radio base station eNB and the mobile station UE.

Thus, the present invention has been explained in detail by using the above-described embodiments; however, it is obvious that for persons skilled in the art, the present invention is not limited to the embodiments explained herein. The present invention can be implemented as a corrected, modified mode without departing from the gist and the scope of the present invention defined by the claims. Therefore, the description of the specification is intended for explaining the example only and does not impose any limited meaning to the present invention.

## Claims

1. A mobile communication method, comprising the steps of:
(A) assigning a radio resource for a physical random access channel in each cell within a mobile communication system in which cells are synchronized; and
(B) performing, at a mobile station, a random access procedure by transmitting a random access preamble via the physical random access channel using the radio resource assigned in each cell, wherein
in the step (A), as the radio resource for a physical random access channel, a resource block in a different sub-frame is assigned between adjacent cells.

2. A mobile communication method, comprising the steps of:
(A) assigning a radio resource for a physical random access channel in each cell within a mobile communication system; and
(B) performing, at a mobile station, a random access procedure by transmitting a random access preamble via the physical random access channel using the radio resource assigned in each cell, wherein
in the step (A), as the radio resource for a physical random access channel, a resource block in a different sub-carrier is assigned between adjacent cells.

3. A mobile communication method, comprising the steps of:
(A) assigning a radio resource for a physical random access channel in each cell within a mobile communication system in which cells are synchronized; and
(B) performing, at a mobile station, a random access procedure by transmitting a random access preamble via the physical random access channel using the radio resource assigned in each cell, wherein
in the step (A), as the radio resource for a physical random access channel, a resource block in a different sub-frame and a different sub-carrier is assigned between adjacent cells.

4. A mobile communication method, comprising the steps of:
(A) assigning a radio resource for a physical random access channel in each sector within each cell within a mobile communication system; and
(B) performing, at a mobile station, a random access procedure by transmitting a random access preamble via the physical random access channel using the radio resource assigned in each sector, wherein
in the step (A), as the radio resource for a physical random access channel, a resource block in a different sub-frame is assigned between adjacent sectors under the control of a radio base station.

5. A radio base station used in a mobile communication system in which cells are synchronized, comprising:
a resource assignment unit configured to assign a radio resource for a physical random access channel, in a cell under the control of the radio base station; and
a random access procedure unit configured to perform a random access procedure upon receipt of a random access preamble via the physical random access channel using the radio resource assigned by the resource assignment unit from a mobile station located in the cell, wherein
the resource assignment unit is configured to assign a resource block in a sub-frame different from a cell adjacent to the cell, as the radio resource for a physical random access channel, in the cell.

6. A radio base station used in a mobile communication system, comprising:
a resource assignment unit configured to assign a radio resource for a physical random access channel, in a cell under the control of the radio base station; and
a random access procedure unit conf igured to perform a random access procedure upon receipt of a random access preamble via the physical random access channel using the radio resource assigned by the resource assignment unit from a mobile station located in the cell, wherein
the resource assignment unit is configured to assign a resource block in a sub-carrier different from a cell adjacent to the cell, as the radio resource for a physical random access channel, in the cell.

7. A radio base station used in a mobile communication system in which cells are synchronized, comprising:
a resource assignment unit configured to assign a radio resource for a physical random access channel , in a cell under the control of the radio base station; and
a random access procedure unit configured to perform a random access procedure upon receipt of a random access preamble via the physical random access channel using the radio resource assigned by the resource assignment unit from a mobile station located in the cell, wherein
the resource assignment unit is configured to assign a resource block in a sub-frame and a sub-carrier different from a cell adjacent to the cell, as the radio resource for a physical random access channel, in the cell.

8. A radio base station used in a mobile communication system, comprising:
a resource assignment unit configured to assign a radio resource for a physical random access channel, in a sector within a cell under the control of the radio base station; and
a random access procedure unit configured to perform a random access procedure upon receipt of a random access preamble via the physical random access channel using the radio resource assigned by the resource assignment unit from a mobile station located in the sector, wherein
the resource assignment unit is configured to assign a resource block in a sub-frame different from a sector adjacent to the sector, as the radio resource for a physical random access channel, in the sector.

9. A mobile communication method according to any one of claims 1 to 3, wherein
in the step (A), the resource block assigned as the radio resource for a physical random access channel is determined in each cell, depending on a configuration or a type of each cell.

10. The mobile communication method according to claim 4, wherein
in the step (A), a resource block assigned as the radio resource for a physical random access channel is determined in each sector, depending on a configuration or a type of each cell or each sector.

11. A radio base station according to any one of claims 5 to 7, wherein
the resource assignment unit is configured to determine a resource block assigned as the radio resource for a physical random access channel, in each cell, depending on a configuration or a type of each cell.

12. A radio base station according to claim 8, wherein
the resource assignment unit is configured to determine a resource block assigned as the radio resource for a physical random access channel, in each sector, depending on a configuration or a type of each cell or each sector.
